(19) Europäisches Patentamt
European Patent Office
Office européen des brevets

(11) **EP 1 013 949 A1**

(12) **DEMANDE DE BREVET EUROPEEN**

(43) Date de publication:
**28.06.2000 Bulletin 2000/26**

(51) Int. Cl.[7]: **F16C 11/12**

(21) Numéro de dépôt: **98123953.6**

(22) Date de dépôt: **17.12.1998**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **Sysmelec SA**
**2002 Neuchâtel (CH)**

(72) Inventeurs:
• **Henein, Simon**
  **1228 Plan-les-Ouates (CH)**

• **Bottinelli, Stefano**
  **6854 San Pietro (CH)**
• **Aymon, Cèdric**
  **1966 Ayen (CH)**

(74) Mandataire:
**Ravenel, Thierry Gérard Louis et al**
**I C B,**
**Ingénieurs Conseils en Brevets SA,**
**7, rue des Sors**
**2074 Marin (CH)**

(54) **Pivot flexible à grande course angulaire et à rigidité élevée**

(57)    La présente invention concerne un pivot flexible destiné notamment à être utilisée dans la réalisation de structures mécaniques articulées pour des robots ou des manipulateurs de haute précision. Ce pivot flexible comporte un bloc de base (BB) fixe et un bloc mobile (BM) relativement au bloc de base (BB), ce bloc mobile (BM) étant lié audit bloc de base (BB) par l'intermédiaire d'une structure flexible (SF) comportant un bloc intermédiaire (BI) lié respectivement au bloc de base (BB) et au bloc mobile (BM) par l'intermédiaire d'une première (B1, B2) et d'une deuxième paire (B3, B4) de bras flexibles respectivement.

Selon un autre aspect de la présente invention, le pivot flexible comprend en outre un chaîne cinématique d'asservissement (CA) permettant d'asservir le mouvement angulaire du bloc intermédiaire (BI) au mouvement angulaire du bloc mobile (BM).

Fig. 11

**Description**

La présente invention concerne une articulation flexible destinée notamment à être utilisée dans la réalisation de structures mécaniques articulées, par exemple, pour des robots ou des manipulateurs de haute précision. En particulier, la présente invention concerne un pivot flexible à grande course angulaire et à rigidité élevée.

Dans la suite de la présente description, on entendra par pivot, ou plus généralement par articulation rotoïde, une articulation autorisant exclusivement la rotation d'un corps solide autour d'un axe de rotation. En d'autres termes, il s'agit d'une structure permettant de réaliser une liaison mécanique entre deux corps solides à un degré de liberté en rotation.

Dans une première partie de cette description, nous nous efforcerons de rappeler quelques notions préliminaires permettant de comparer et distinguer, de par leurs avantages et désavantages respectifs, les articulations flexibles des guidages lisses ou roulants.

Tout comme les guidages lisses ou roulants, les articulations flexibles permettent de réaliser des liaisons mécaniques. Dans les deux premiers cas, la liaison mécanique est réalisée par le contact glissant ou roulant entre deux corps solides. Les articulations flexibles sont par contre caractérisées par le fait qu'elles utilisent les propriétés élastiques de la matière. Ces articulations flexibles présentent ainsi de nombreux avantages que nous pouvons résumer comme suit :

(i) Le contact glissant ou roulant entre deux solides engendre inévitablement du frottement qui est généralement néfaste pour le fonctionnement de la liaison mécanique. Ce frottement dissipe en effet de l'énergie provoquant un phénomène d'hystérésis mécanique. A basse vitesse, il provoque un mouvement saccadé, dénommé "stick slip", qui limite la résolution de mouvement. Les articulations flexibles, quant à elles, sont exemptes de tout frottement de glissement ou de roulement. Le seul frottement qui subsiste est constitué par le frottement interne de la matière sollicitée élastiquement. Ce frottement est pratiquement négligeable.

(ii) Le frottement caractérisant les guidages lisses ou roulant est par ailleurs à l'origine d'une usure des parties des solides en contact. Cette usure diminue leur précision par la modification de leur géométrie et par l'augmentation de leurs jeux. Cette usure est également le principal facteur limitant la durée de vie des guidages lisses ou roulants. Les articulations flexibles, quant à elles, sont exemptes de toute usure. Leur durée de vie n'est ainsi limitée que par la fatigue du matériau sollicité élastiquement et de son éventuelle corrosion.

(iii) Les guidages lisses ou roulants présentent généralement du jeu mécanique qui, lorsqu'il est gênant, doit être rattrapé par un système de précontrainte mécanique adéquat. Les articulations flexibles sont totalement exemptes de jeu.

(iv) Les guidages lisses ou roulants sont constitués de plusieurs pièces mécaniques assemblées. Ces assemblages augmentent généralement l'encombrement des guidages et diminuent leur précision de construction. Les articulations flexibles peuvent, selon les cas, être fabriquées de manière monolithique, généralement par des opérations de fraisage, d'électroérosion ou d'usinage laser, ce qui les rend très compactes, relativement faciles à réaliser et précises.

(v) La rigidité des guidages roulants est faible s'ils ne sont pas précontraints. Les rigidités transverses des articulations flexibles, c'est-à-dire les rigidités selon leurs degrés de liberté bloqués peuvent être extrêmement élevées si elles sont biens conçues.

(vi) En termes de propreté, l'usure des guidages lisses et roulants libère des particules de matière qui peuvent polluer l'air ambiant, ceci s'avérant particulièrement désavantageux si ces guidages sont destinés à être utilisé pour un robot ou un manipulateur susceptible de travailler dans des salles blanches. Ces guidages requièrent par ailleurs souvent une lubrification qui constitue une source de pollution supplémentaire. Les articulations flexibles ne libèrent par contre pas de particules solides et ne requièrent aucun graissage.

Ces multiples avantages ne vont toutefois pas sans un certain nombre de limitations :

(i) La course des guidages lisses ou roulants est illimitée (ex. pivots, roulements) ou limitée uniquement par la taille des éléments les constituant (ex. glissières, guidages linéaires). Il n'en va pas de même pour les articulations flexibles qui voient leur course limitée par les limites élastiques de la matière utilisée. Des déformations trop importantes des parties flexibles engendrent des contraintes exagérément élevées dans la matière, qui peuvent provoquer la rupture de l'articulation. Ceci limite l'usage des articulations flexibles aux applications à course relativement faible.

(ii) Les rigidités des articulations flexibles selon leurs degrés de liberté ne peuvent être ramenées à zéro, comme le voudraient des liaisons idéales. Lors de la déformation des articulations, il apparaît une force de rappel qui tend à les ramener vers leur position non déformée. Dans certains cas, cette force de rappel qui varie avec l'amplitude de la déformation peut être gênante, dans d'autres, elle peut être utile.

(iii) Les liaisons idéales élémentaires (glissières, pivots, appuis plans, rotules, etc.) suivent des modèles géométriques très simples (translation le long d'une droite, rotation autour d'un point, etc.).

Les guidages lisses et roulants permettent de reproduire relativement fidèlement ces mouvements idéaux. Ce n'est pas le cas des articulations flexibles, qui suivent généralement des mouvements plus complexes à décrire (translation le long d'une parabole, rotation autour d'un point se déplaçant au cours du mouvement, etc.). Ceci ne les empêche toutefois pas de suivre ces mouvements avec une très grande répétabilité.

Cette rapide comparaison entre les guidages lisses ou roulants et les articulations flexibles montre à quel point ces dernières sont intéressantes pour la réalisation de robots ou de manipulateurs de très haute précision si les débattements de leurs articulations sont faibles.

Les articulations flexibles sont utilisées comme guidages mécaniques servant de liaison entre deux solides. Sans liaison, un solide possède six degrés de liberté. La liaison de ce solide avec un élément fixe bloque certains de ces degrés de liberté et en conserve d'autres. Une liaison idéale ne freine aucunement le mouvement du solide selon ses degrés de liberté, et bloque totalement ses mouvements selon ses degrés de liberté bloqués. Les liaisons réelles ne satisfont jamais ces deux critères: si elles sont basées sur la déformation élastique de la matière, il apparaît, comme nous l'avons déjà mentionné, une force de rappel qui tend à les ramener vers leur position non déformée.

Nous pouvons caractériser les articulations flexibles par trois rigidités linéaires et trois rigidités angulaires selon trois axes orthogonaux deux à deux. Dans le cas du pivot, ces axes sont choisis de manière à ce que l'un d'entre eux coïncide avec l'axe de rotation du pivot.

Nous nommons force ou moment transverse, une force ou un moment qui sollicite l'articulation selon un de ses degrés de liberté bloqués. Nous appelons rigidité linéaire (respectivement angulaire) transverse, les rigidités liées aux forces (respectivement aux moments) transverses. Plus les rigidités transverses d'une articulation flexible sont élevées et plus les rigidités selon ses degrés de liberté sont faibles, plus elle se rapproche d'une liaison idéale. De manière générale, on cherchera ainsi à maximiser le rapport rigidités transverses / rigidités selon les degrés de liberté.

Les rigidités transverses de l'articulation ne pouvant être infinies, des mouvements parasites de faible amplitude apparaissent lorsque des forces externes tentent de déplacer le solide selon l'un de ses degrés de liberté bloqués. Les liaisons basées sur la déformation élastique de la matière permettent de s'affranchir de la majeur partie du frottement, mais la rigidité de l'élément flexible ne pouvant être nulle, il apparaît ainsi une force de rappel qui s'oppose au mouvement selon les degrés de liberté de la liaison.

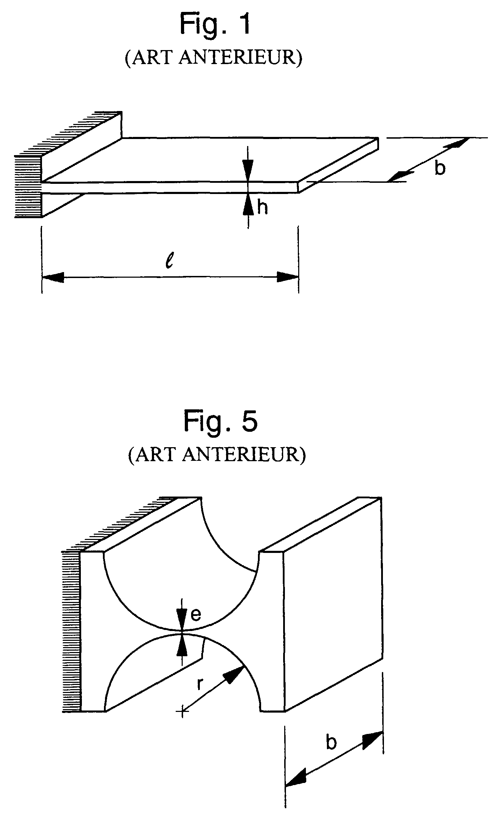

On mentionnera qu'il est connu de l'art antérieur de réaliser des articulations rotoïdes au moyen de lames. Nous appelons lame, tel que cela est illustrée à la figure 1, toute poutre prismatique, de section rectangulaire, dont la largeur b est au moins dix fois supérieur à l'épaisseur h. En d'autres termes, une poutre dont l'élancement de la section est supérieur à 10 : b/h > 10.

Les lames constituent des articulations élémentaires très couramment utilisées. Elles sont généralement découpées dans des feuilles ou des bandes de métal et elles doivent donc être liées par un attachement mécanique (vissage, collage, soudage, etc.) aux diverses parties constituant les articulations. Elles sont ainsi généralement encastrées dans des blocs rigides. Pour que le comportement des articulations à lames soit fidèle aux modèles théoriques, il est indispensable que ces encastrements soient réalisés avec soin.

Ces assemblages présentent l'inconvénient de cumuler les erreurs liées aux tolérances de fabrication de chaque élément et de réduire ainsi la précision des articulations réalisées. Pour pallier à cet inconvénient, on notera qu'il est possible de fabriquer des articulations monolithiques réalisées dans un seul bloc de matière dans lequel des évidements, usinés généralement par fraisage, électroérosion ou laser, créent des zones flexibles. Cette approche permet de réaliser des articulations avec une très grande précision et des encastrements idéaux peu encombrants. De plus, elle permet de réaliser des géométries autres que la poutre prismatique (lame) qui améliorent le comportement des articulations. En effet, le principal point faible de la lame utilisée comme articulation élémentaire est sa forte susceptibilité au flambage. L'utilisation de cous circulaires, par exemple, comme on le verra plus tard, augmente grandement la capacité de charge des articulations.

L'utilisation d'une seule lame pour réaliser un pivot flexible ne permet pas d'obtenir de bonnes caractéristiques, car la rigidité en torsion des lames est voisine de leur rigidité en flexion, c'est-à-dire faible. Pour réaliser un pivot dont les rigidités transverses sont élevées, on utilise couramment deux lames non parallèles pour lier le corps solide mobile, dénommé ci-après bloc mobile, au corps solide fixe, dénommé ci-après bloc de base.

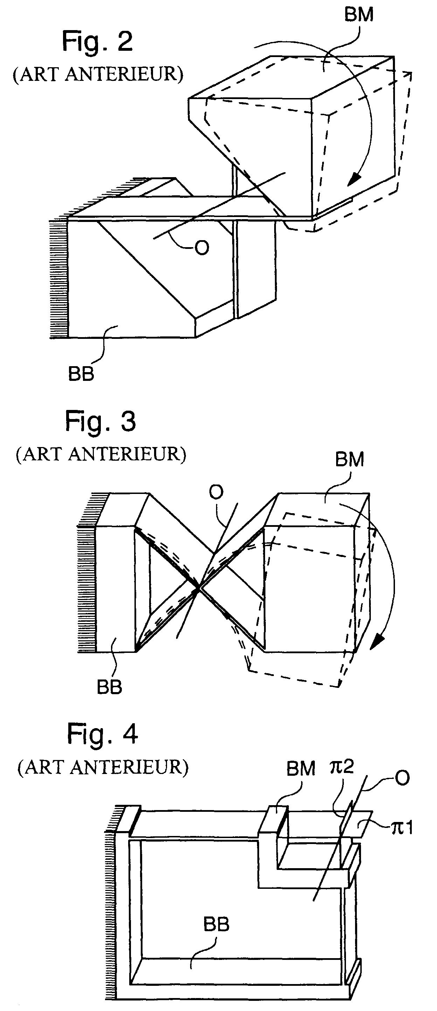

Il est par exemple connu de réaliser un pivot au moyen de deux lames croisées séparées comme cela est illustré dans la figure 2. Cette articulation est très couramment utilisée pour réaliser un pivot flexible à partir d'éléments discrets. Elle est constituée de deux lames disposées en général à 90° et reliant le bloc de base BB au bloc mobile BM du pivot. Cette structure constitue une articulation rotoïde dont l'axe de rotation O du bloc mobile BM relativement au bloc de base BB coïncide approximativement avec la droite d'intersection entre les deux plans définis par les lames au repos (non fléchies).

Cette articulation n'est pratiquement pas réalisable de manière monolithique sans que deux lames ne soient liées à leur intersection. Or, le fait qu'elles soient liées change le comportement de l'articulation qui devient alors un pivot à deux lames croisées non séparées.

Le pivot à deux lames croisées non séparées, dont une illustration est présentée à la figure 3, est l'homologue monolithique du pivot à deux lames croisées séparées. Il n'est pratiquement pas réalisable avec des éléments discrets. Cette structure constitue une articulation rotoïde dont l'axe de rotation O du bloc mobile BM relativement au bloc de base BB coïncide approximativement avec la droite d'intersection entre les deux plans définis par les lames au repos (non fléchies).

A ces deux premiers types de pivots à lames croisées vient s'ajouter le pivot RCC à deux lames. Par RCC (Remote Center Compliance), on entend que le centre de pivotement de l'articulation est situé à l'extérieur de la structure, à un endroit où il peut ne pas il y avoir de matière. Comme les pivots à deux lames croisées séparées et non séparées, le pivot RCC à deux lames, dont une illustration est présentée à la figure 4, constitue une articulation rotoïde dont l'axe de rotation O du bloc mobile BM relativement au bloc de base BB coïncide approximativement avec la droite d'intersection entre les deux plans π1 et π2 définis par les lames au repos (non fléchies).

La différence entre cette dernière structure et les deux précédentes réside dans la position relative de l'axe de rotation et des lames: dans le cas du pivot RCC à deux lames, l'axe de rotation se trouve ainsi à l'extérieur de la structure, alors que dans le cas des deux autres pivots, l'axe de rotation passe au travers des lames.

Les trois pivots à lames présentés ci-dessus souffrent de limitations venant des lames qui les constituent. Le débattement angulaire de ces articulations est limité car un élancement exagéré des lames les rend trop susceptibles au flambage en cas de charges en compression, et diminue leurs rigidités transverses. De plus, l'usinage de lames pour réaliser des articulations monolithiques est difficile. L'utilisation de cous circulaires, décrits ci-après, comme éléments flexibles plutôt que des lames permet de pallier à ces inconvénients.

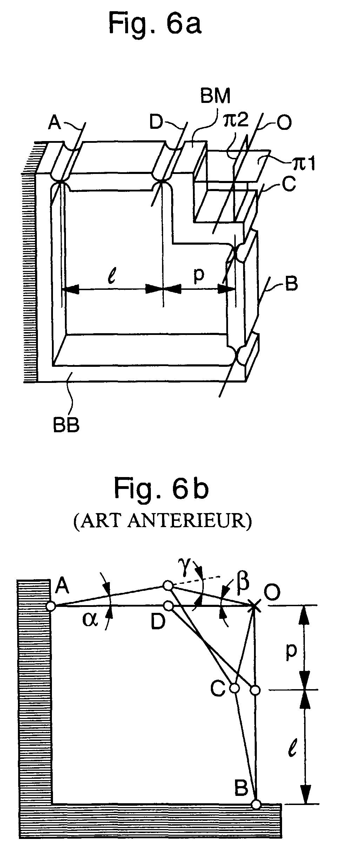

Nous appelons cou circulaire toute poutre de section rectangulaire d'épaisseur variable dont le profil décrit deux demi-cercles, comme cela est illustré dans la figure 5, et dont le rayon r des demi-cercles est au moins supérieur à cinq fois l'épaisseur minimale e de la poutre : r/e > 5. Cette dernière condition garantit que le facteur de concentration de contrainte soit voisin de 1, c'est-à-dire que la variation de section soit suffisamment douce pour éviter toute concentration de contrainte au milieu du cou.

Les cous circulaires constituent une articulation élémentaire très couramment utilisée de par sa simplicité géométrique : le cercle est en effet une forme géométrique très aisément réalisable par des machines-outils à commande numérique, voire par simple perçage.

Ces cous circulaires ont en outre pour avantage une faible susceptibilité au flambage et permettent par ailleurs des réaliser des articulations monolithiques de très haute précision. Un inconvénient réside toutefois dans un élancement de section (rapport b/e) limité par le procédé d'usinage.

Ces cous circulaires, de par leur facilité de fabrication et leur faible susceptibilité au flambage permettent ainsi de pallier aux inconvénients des articulations rotoïdes à lames. En particulier, un pivot RCC à quatre cous circulaires, tel qu'illustré dans la figure 6a, peut être aisément réalisé.

Ce pivot RCC à quatre cous circulaires A, B, C et D constitue une articulation rotoïde dont l'axe de rotation O du bloc mobile BM relativement au bloc de base BB coïncide approximativement avec la droite d'intersection entre les deux plans π1 et π2 définis, pour chacun des bras au repos, par les deux axes de rotation des cous A-D et B-C respectivement.

La figure 6b présente une modélisation de cette structure pour laquelle les hypothèses suivantes ont été formulées :

- Les cous circulaires A, B, C et D se comportent comme des pivots élémentaires idéaux de rigidité angulaire nulle et dont les autres rigidités sont infinies.
- Les angles de rotation des cous et du bloc mobile BM du pivot RCC sont suffisamment faibles pour les confondre avec leur sinus :

$$\sin \alpha \approx \alpha \; ; \sin \beta \approx \beta \; ; \sin \gamma \approx \gamma$$

- Le bloc mobile BM pivote exactement autour de l'axe de rotation O.

Nous avons alors, pour une rotation du bloc mobile BM d'un angle β, une rotation des pivots A et B d'un angle α, et une rotation des pivots C et D d'un angle γ avec:

$$\alpha = p/l\beta \text{ et } \gamma = (1 + p/l)\beta$$

où p et l sont respectivement la distance entre les centres des pivots liés au bloc mobile BM et l'axe de rotation O, et la longueur des bras entre les centres des pivots.

D'après ces équations, on constate ainsi que l'on a toujours γ supérieur à α. Ce sont donc les pivots C et D qui sont les plus sollicités lors de la rotation du bloc mobile BM et c'est leur course angulaire qui limite la course angulaire $\beta_{max}$ de l'ensemble du pivot.

$$\beta_{max} = \theta_{max} /(1 + p/l)$$

où $\theta_{max}$ est la course angulaire des pivots C et D.

La course angulaire du pivot, soit du bloc mobile BM, est ainsi forcément inférieure à la course des pivots élémentaires qui le constituent, et ce d'autant plus que le rapport p/l est éleve.

Des limites technologiques liées aux procédés d'usinage, ainsi que les limites physiques liées aux propriétés élastiques du matériau font que la course angulaire des cous circulaires ne peut que très difficilement dépasser $\pm$ 10°. Or nous venons de voir que la course angulaire $\beta_{max}$ du pivot est forcément inférieure à celle des pivots élémentaires qui le constituent, donc inférieure à une dizaine de degrés.

Un premier but de la présente invention est ainsi de réaliser un pivot flexible n'ayant pas les désavantages des pivots flexibles de l'art antérieur et dont la course angulaire est augmentée et supérieure à la course angulaire des pivots élémentaires qui le constituent.

Afin de répondre à ce premier but, la présente invention a pour objet un pivot flexible comportant un bloc de base fixe et un bloc mobile relativement audit bloc de base, ce bloc mobile étant lié audit bloc de base par l'intermédiaire d'une structure flexible définissant un axe de rotation autour duquel ce bloc mobile peut sensiblement pivoter, ce pivot étant caractérisé en ce que ladite structure flexible comporte un bloc intermédiaire lié respectivement audit bloc de base et audit bloc mobile par l'intermédiaire d'une première et d'une deuxième paire de bras flexibles respectivement.

La solution préconisée par la présente invention permet ainsi de réaliser un pivot n'ayant pas les désavantages des pivots à lames de l'art antérieur, à savoir notamment leur forte susceptibilité au flambage, et dont la course angulaire est plus élevée que la course angulaire des pivots élémentaires qui le constituent. Cette solution permet notamment de doubler approximativement la course angulaire du pivot RCC à quatre cous circulaires décrit en préambule.

On notera cependant que pour certaines applications, en particulier des applications où le pivot flexible selon la présente invention est utilisé pour articuler la structure mécanique de robots ou de manipulateurs, des forces radiales peuvent fréquemment apparaître sur le pivot. Ces forces radiales agissant sur le pivot modifient l'équilibre des forces qui détermine la position angulaire du bloc intermédiaire; la trajectoire du bloc mobile est en conséquence également modifiée par la présence de forces radiales. En d'autres termes, la rigidité du pivot flexible sous l'effet de forces transverses radiales est faible, ce qui constitue un inconvénient majeur, notamment dans le cas de figure où ce pivot est utilisé dans la structure de robots ou de manipulateurs.

Un deuxième but de la présente invention est ainsi de réaliser un pivot flexible de grande rigidité permettant de pallier à cet inconvénient, notamment afin que ce pivot puisse être utilisé pour articuler une structure mécanique de robots ou de manipulateurs.

Afin de répondre à ce deuxième but, la présente invention a ainsi également pour objet un pivot flexible, tel que proposé ci-dessus, caractérisé en ce qu'il comporte en outre une chaîne cinématique liant ledit bloc mobile, ledit bloc intermédiaire et ledit bloc de base, de sorte que le mouvement angulaire dudit bloc intermédiaire est asservi au mouvement angulaire dudit bloc mobile.

Ce pivot flexible présente ainsi l'avantage d'offrir, outre une grande course angulaire, une rigidité élevée, permettant d'utiliser celui-ci pour réaliser des structures mécaniques articulées pour des robots ou des manipulateurs de grande précision.

D'autres caractéristiques et avantages de la présente invention apparaîtront à la lecture de la description qui va suivre, faite en se référant aux dessins annexés, donnés uniquement à titre d'exemple, et dans lesquels :

- la figure 1 est une illustration de la notion de lame;
- la figure 2 est une illustration d'un pivot à deux lames séparées;
- la figure 3 est une illustration d'un pivot à deux lames non séparées;
- la figure 4 est une illustration d'un pivot RCC à deux lames;
- la figure 5 est une illustration de la notion de cou circulaire;
- les figures 6a et 6b sont des illustrations d'un pivot RCC à quatre cous circulaires et d'une modélisation de ce pivot RCC;
- la figure 7 est une illustration du pivot flexible à grande course selon la présente invention;
- la figure 8 est une illustration de la cinématique du pivot flexible à grande course selon la présente invention;
- la figure 9 est une illustration schématique d'une chaîne cinématique d'asservissement du pivot flexible selon la présente invention;
- la figure 10 est une illustration permettant d'expliquer le principe de fonctionnement de la chaîne cinématique d'asservissement de la figure 9;
- la figure 11 est une illustration d'un exemple de réalisation sous forme monolithique du pivot flexible selon la présente invention comprenant en outre une chaîne cinématique d'asservissement;
- la figure 12 présente une vue d'ensemble schématique du micromanipulateur TRIBIAS à structure parallèle à six degrés de liberté;
- la figure 13 présente un exemple de réalisation d'un micromanipulateur de type TRIBIAS incorporant des pivots flexibles à grande course et à rigidité élevée selon la présente invention;
- la figure 14 est une illustration schématique d'une variante de la chaîne cinématique d'asservissement présentée à la figure 9; et
- la figure 15 est une illustration schématique d'une autre variante de la chaîne cinématique d'asservissement présentée à la figure 9.

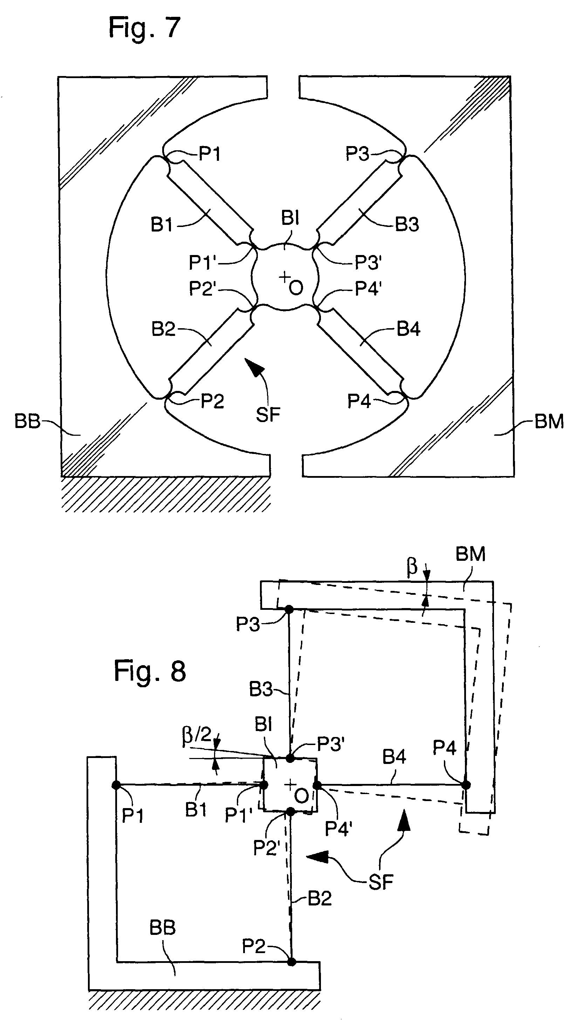

La figure 7 présente une illustration d'un pivot flexible selon la présente invention. Ce pivot flexible assure une liaison mécanique entre un bloc de base BB fixe, et un bloc mobile BM relativement à ce bloc de base BB. Le bloc mobile BM est lié au bloc de base BB par l'intermédiaire d'une structure flexible SF définissant un axe de rotation O autour duquel ce bloc mobile BM peut sensiblement pivoter.

Selon la présente invention, cette structure flexible SF est constituée d'éléments rigides et de zones flexibles jouant le rôle de pivots élémentaires. Cette structure flexible SF comporte ainsi un bloc intermédiaire BI lié au bloc de base BB et au bloc mobile BM par l'intermédiaire de deux paires de bras flexibles B1, B2 et B3, B4 respectivement, comportant chacun, au niveau de leurs liaisons avec les blocs respectifs, une paire de pivots élémentaires constitués, dans cet exemple, de cous circulaires indiqués respectivement par les références P1-P1', P2-P2', P3-P3' et P4-P4' dans la figure 7.

Le pivot flexible selon la présente invention constitue ainsi une articulation rotoïde plane pouvant avantageusement être réalisée de manière monolithique par fraisage, électroérosion ou usinage laser.

On mentionnera que les bras flexibles B1 à B4 peuvent être réalisés au moyen de lames mais, que pour les raisons évoquées en préambule, soit notamment une trop grande susceptibilité au flambage et des difficultés de fabriquer la structure de manière monolithique, il est préférable d'utiliser des cous circulaires comme cela est proposé ici. On notera toutefois que le profil des pivots élémentaires peut alternativement différer de celui décrit par deux demi-cercles. En effet, il est concevable de réaliser des cous présentant un profil sensiblement rectangulaire ou elliptique, par exemple, ou présentant un profil comprenant une portion d'arc de cercle. En définitive, le profil des cous est limité essentiellement par le procédé d'usinage utilisé.

Le pivot flexible selon la présente invention peut globalement être décrit comme l'agencement en série de deux pivots RCC ayant leur axe de rotation confondus. En effet, on peut constater que le bloc de base BB, le bloc intermédiaire BI et la paire de bras B1, B2 constituent d'une part un premier pivot RCC, et que le bloc mobile BM, le bloc intermédiaire BI et la paire de bras B3, B4 constituent d'autre part un deuxième pivot RCC dont les axes de rotation O sont confondus.

Cette structure permet, comme on peut le comprendre de la figure 8, de doubler, pour des dimensions équivalentes, la course angulaire du simple pivot RCC décrit en préambule (figures 6a et 6b). En effet, on peut constater que pour un déplacement angulaire β du bloc mobile BM, le bloc intermédiaire BI pivote lui d'un angle β/2. Dans la figure 8, on a ainsi schématisé par des traitillés l'allure de la structure du pivot flexible selon la présente invention lors d'un mouvement de pivotement β du bloc mobile BM autour de son axe de rotation O.

Malgré l'utilisation de pivots élémentaires formés, dans cet exemple, de cous circulaires dont la course angulaire peut difficilement dépasser ± 10°, il est ainsi possible de réaliser un pivot dont la course angulaire du bloc mobile BM peut dépasser cette limite.

La structure selon la présente invention constitue ainsi une articulation rotoïde dont l'axe de rotation O coïncide approximativement avec la droite d'intersection des deux plans définis, pour chacun des bras au repos, par les deux axes de rotations des pivots élémentaires.

Il est à noter que la structure cinématique du pivot flexible selon la présente invention possède deux degrés de liberté, alors que l'on cherche à réaliser une articulation rotoïde à un degré de liberté. En effet, cette structure est constituée de huit pivots élémentaires, et comporte deux boucles. Or, selon la formule de Grübler, le nombre de degrés de liberté est égal à la somme des mobilités des articulations moins trois fois le nombre de boucles soit :

$$8 - 3 \times 2 = 2 \text{ degrés de liberté}$$

Ces deux degrés de liberté sont, d'une part, la rotation du bloc mobile BM autour de l'axe de rotation O et, d'autre part, la rotation du bloc intermédiaire BI autour de ce même axe de rotation O.

Cette rotation du bloc intermédiaire BI constitue un degré de liberté interne à la structure. En admettant que les pivots élémentaires se comportent comme des pivots ponctuels idéaux de rigidité angulaire nulle, la présence de ce degré de liberté interne implique que la position angulaire du bloc intermédiaire BI reste indéterminée quelle que soit la position angulaire imposée au bloc mobile BM. Ceci a pour conséquence que la trajectoire suivie par le bloc mobile BM diffère légèrement suivant la position angulaire du bloc intermédiaire BI et n'est donc pas unique et répétable.

Toutefois, la structure flexible réelle est formée de pivots élémentaires dont la rigidité angulaire n'est pas nulle. La position angulaire du bloc intermédiaire n'est donc plus indéterminée, mais résulte de l'équilibre des forces en jeu. Si les huit pivots élémentaires constituant l'articulation sont parfaitement identiques, et qu'un moment pur agit sur le bloc mobile BM pour le faire pivoter, alors le bloc intermédiaire BI parcourt un angle qui est la moitié de l'angle parcouru par le bloc mobile BM. Dans ces conditions, la trajectoire suivie par le bloc mobile BM, lorsque le moment pur qui s'y applique varie, est unique et répétable, et la course angulaire du bloc mobile BM est exactement le double de celle du bloc intermédiaire BI.

Lorsque le pivot flexible selon la présente invention est utilisé pour articuler la structure mécanique de robots ou de manipulateurs, il apparaît fréquemment des forces transverses radiales sur le pivot. Or ces forces radiales modifient l'équilibre des forces qui détermine la position angulaire du bloc intermédiaire BI et la trajectoire du bloc mobile BM est ainsi également modifiée. On notera cependant que le pivot flexible qui vient d'être décrit peut être utilisé pour des applications dans lesquelles aucune charge radiale n'apparaît, par exemple pour assurer le positionnement d'un élément optique telle une lentille.

Afin de pallier au problème susmentionné, il est proposé, selon la présente invention, de rajouter une chaîne cinématique d'asservissement CA qui supprime le degré de liberté interne en couplant le mouvement angulaire du bloc intermédiaire BI au mouvement angulaire du bloc mobile BM. En d'autres termes, cette chaîne cinématique d'asservissement CA est agencée pour asservir le mouvement angulaire du bloc intermédiaire BI au mouvement angulaire du bloc mobile BM.

Dans le présent cas de figure, cette chaîne cinématique d'asservissement CA est préférablement réalisée de sorte que le bloc intermédiaire BI parcoure la moitié de l'angle parcouru par le bloc mobile BM.

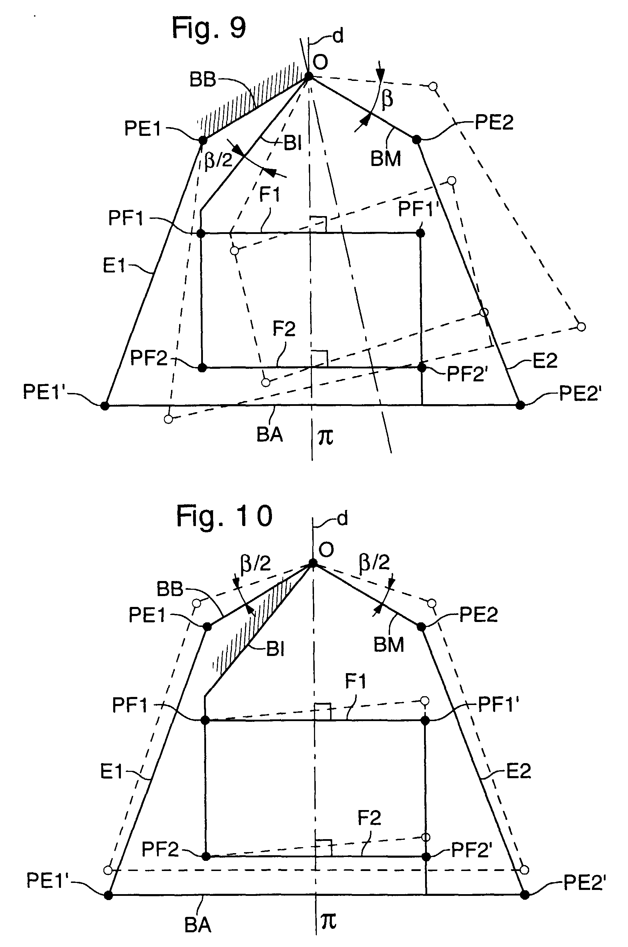

On décrira maintenant au moyen des figures 9 et 10 un exemple d'une telle chaîne cinématique d'asservissement CA. Les figures 9 et 10 présentent ainsi de manière schématique une chaîne cinématique d'asservissement CA associée au pivot flexible décrit précédemment. Dans la figure 9, il a été fait l'hypothèse que le bloc intermédiaire BI et le bloc mobile BM pivotent exactement autour de l'axe de rotation O, ce qui permet de représenter ceuxci par deux segments rigides pouvant pivoter indépendamment autour du point O lié au bloc de base BB fixe.

La chaîne cinématique d'asservissement CA a ici pour rôle d'imposer au bloc intermédiaire BI un angle de rotation qui soit la moitié de l'angle de rotation β du bloc mobile BM. Cette chaîne cinématique d'asservissement CA comprend ainsi un bloc d'asservissement BA lié au bloc de base BB et au bloc mobile BM par l'intermédiaire de premier et deuxième bras flexibles identiques E1 et E2 respectivement. Des troisième et quatrième bras flexibles identiques F1 et F2, disposés en parallèle, assurent d'autre part la liaison du bloc d'asservissement BA au bloc intermédiaire BI du pivot. Chacun des bras flexibles E1, E2, F1 et F2 comporte, au niveau de leur liaison avec les blocs respectifs, une paire de pivots élémentaires indiqués respectivement par les références PE1-PE1', PE2-PE2', PF1-PF1' et PF2-PF2'. Ces pivots élémentaires peuvent avantageusement être constitués de cous circulaires.

Les premier et deuxième bras flexibles E1 et E2 sont disposés symétriquement par rapport à un plan bissecteur π du pivot (au repos). Ce plan bissecteur π, contenant l'axe de rotation O du pivot, est représenté par une droite d dans les figures 9 et 10. Les troisième et quatrième bras flexibles F1 et F2 sont disposés sensiblement perpendiculairement au plan bissecteur π comme cela est illustré dans les figures 9 et 10, et constituent un guidage linéaire, quasi rectiligne, du bloc d'asservissement BA relativement au bloc intermédiaire BI. En effet, en première approximation, pour des déplacements de faible amplitude, le bloc d'asservissement BA est guidé en translation, le long de la droite d, par ces troisième et quatrième bras flexibles F1 et F2.

La figure 10 permet de démontrer de quelle manière la chaîne cinématique d'asservissement CA présentée dans la figure 9 joue effectivement son rôle d'asservissement. Dans cette figure, on considère, à titre explicatif, que le bloc intermédiaire BI est fixe et que le bloc de base BB et le bloc mobile BM sont libres de pivoter indépendamment autour de l'axe de rotation O. De ce point de vue, si la chaîne cinématique d'asservissement CA joue bien son rôle, lorsque le bloc mobile BM s'écarte du bloc intermédiaire d'un angle β/2, le bloc de base BB doit s'écarter du bloc intermédiaire BI d'un angle -β/2.

Pour une rotation d'un angle β/2 du bloc mobile BM relativement au bloc intermédiaire BI, le bloc d'asservissement BA est guidé en translation par les troisième et quatrième bras flexibles F1 et F2 le long de la droite d définie par le plan bissecteur π du pivot. Le premier bras flexible E1 restant symétrique au second bras flexible E2 par rapport au plan bissecteur π, on constate ainsi que le bloc de base BB s'écarte du bloc intermédiaire BI d'un angle - β/2.

La chaîne cinématique d'asservissement CA joue ainsi parfaitement son rôle, dans l'hypothèse où les troisième et quatrième bras flexibles F1 et F2 constituent un guidage linéaire rectiligne suivant la droite d. En réalité, les troisième et quatrième bras flexibles F1 et F2 constituent un guidage linéaire circulaire et la trajectoire du bloc d'asservissement BA a l'allure d'un arc de cercle tangent à la droite d. Dans la mesure où cet arc de cercle s'écarte de la droite d, la symétrie du mouvement entre les premier et deuxième bras flexibles E1 et E2 n'est pas parfaitement conservée, et, pour une rotation d'un angle β/2 du bloc mobile BM, le bloc de base BB pivote d'un angle légèrement différent à - β/2. Cette imperfection de l'asservissement a pour conséquence que la course totale du pivot flexible selon la présente invention est, pour des dimensions équivalentes, légèrement inférieure au double de la course d'un pivot RCC simple présenté en préambule. Toutefois, si les débattements angulaires des troisième et quatrième bras flexibles F1 et F2 restent faibles, cette perte de course reste pratiquement négligeable.

La chaîne cinématique d'asservissement CA qui vient d'être décrite permet ainsi de rigidifier le pivot flexible décrit précédemment en supprimant son degré de liberté interne. En effet, la structure cinématique du pivot ainsi réalisé contient seize pivots élémentaires et cinq boucles, et, selon la formule de Grùbler, la structure ne possède donc que :

$$16 - 3 \times 5 = 1 \text{ degré de liberté}$$

On mentionnera par ailleurs que le mouvement du pivot flexible selon la présente invention ne suit pas un modèle géométrique simple (rotation autour d'un point fixe) car l'axe de rotation du pivot se déplace légèrement au cours du mouvement. Ce petit déplacement du centre de rotation du pivot selon la présente invention implique ainsi que le bloc mobile BM suit une courbe qui diffère légèrement d'un arc de cercle. Ceci n'est toutefois nullement gênant car cette trajectoire est indépendante des charges radiales agissant sur le bloc mobile BM et est donc d'une grande répétabilité.

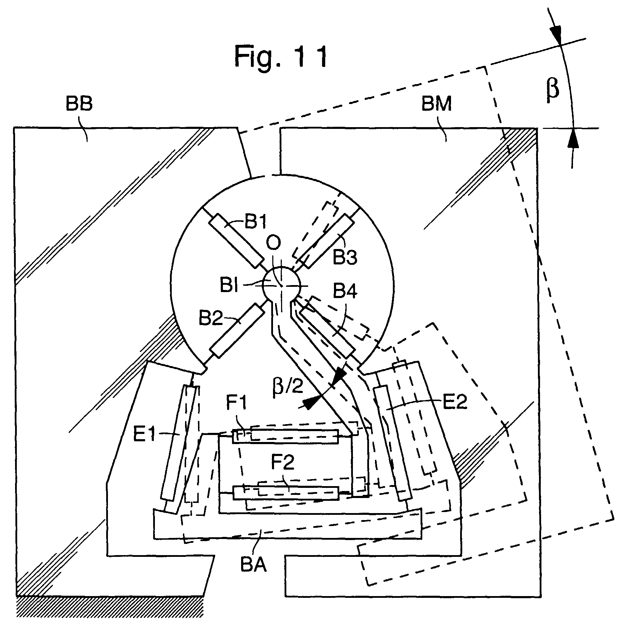

La figure 11 présente un exemple de réalisation du pivot flexible à grande course et à rigidité élevée selon la présente invention. Ce pivot flexible comprend ainsi d'une part, le bloc de base BB fixe, le bloc mobile BM et la structure flexible SF constituée du bloc intermédiaire BI et des deux paires de bras flexibles B1, B2 et B3, B4, et, d'autre part, la chaîne cinématique d'asservissement CA comprenant le bloc d'asservissement BA et les quatre bras flexibles E1, E2, F1 et F2.

Le pivot flexible selon la présente invention forme avantageusement une structure plane sans interférences mécaniques entre les divers bras et blocs du pivot. Celui-ci est ainsi très avantageusement réalisable, dans son ensemble, de manière monolithique. La fabrication du pivot flexible selon la présente invention est ainsi grandement simplifiée.

La chaîne cinématique d'asservissement CA est par ailleurs agencée de sorte qu'aucun des pivots élémentaires la constituant ne pivote d'un angle supérieur à l'angle des pivots élémentaires constituant le pivot flexible. Cette condition permet d'éviter que ce ne soit la chaîne cinématique d'asservissement CA qui limite la course de l'ensemble de la structure du pivot. Par ailleurs, des butées intégrées au pivot flexible sur le bloc de base BB et le bloc mobile BM permettent préférablement de limiter le débattement angulaire du pivot flexible.

Il a ainsi pu être réalisé, en pratique, selon la présente invention, un pivot flexible ayant une course de $\pm$ 15°, dont aucun des seize pivots élémentaires ne pivote plus de $\pm$ 10°, et dont la structure plane a été usinée de manière monolithique par électroérosion à fil.

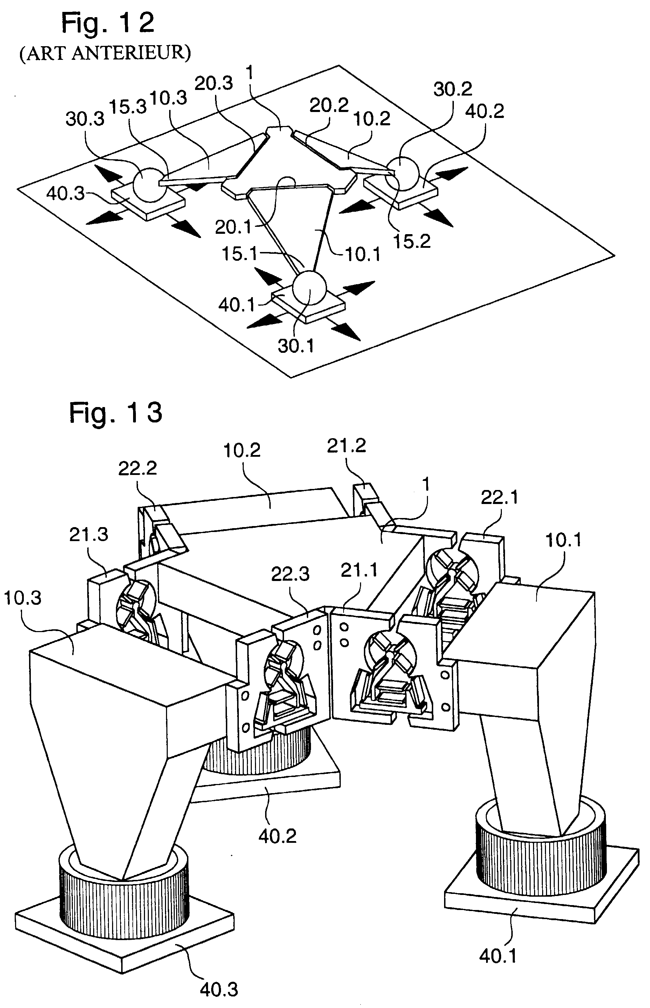

On décrira maintenant brièvement un exemple non limitatif d'application du pivot flexible à grande course et à rigidité élevée utilisé pour articuler la structure mécanique d'un micromanipulateur de haute précision. La figure 12 présente une vue d'ensemble schématique d'un micromanipulateur d'assemblage destiné notamment au positionnement automatique de fibres optiques en face de guides optiques. La structure de base de ce micromanipulateur, dénommé TRIBIAS, est amplement décrite dans le document "Micromanipulateur pour l'alignement optique", E. Pernette, R. Clavel, Congrès Européen de Chronométrie 96, Bienne, Suisse, pp. 201-204, octobre 1996 et dans la thèse intitulée "Robot de haute précision à 6 degrés de liberté pour l'assemblage des microsystèmes", E. Pernette, du 18.12.1998, département de Microtechnique de l'Ecole Polytechnique Fédérale de Lausanne, ces deux documents étant incorporés ici par référence.

Ce micromanipulateur est caractérisé par une structure parallèle symétrique à six degrés de liberté. Il comprend notamment, comme cela est schématisé dans la figure 12, une plate-forme 1, trois bras 10.1 à 10.3 articulés à ladite plate-forme 1 et disposés symétriquement autour de cette dernière. Chaque bras comprend un pivot 20 (20.1 à 20.3) liant le bras à la plate-forme 1, et une rotule 30 (30.1 à 30.3) liant un pied 15 (15.1 à 15.3) du bras à un actionneur plan 40 (40.1 à 40.3) à deux degrés de liberté.

Les pivots utilisés pour articuler chacun des bras à la plate-forme utilisent, dans cet exemple, des guidages lisses ou roulants. Afin de s'affranchir totalement du frottement et du jeu qui caractérisent notamment ce type d'articulations, comme cela a été décrit en préambule, chacun des pivots 20.1 à 20.3 peut avantageusement être remplacé par un pivot flexible formé d'une paire de pivots flexibles 21 et 22 (21.1 à 21.3 et 22.1 à 22.3) à grande course et à grande rigidité selon la présente invention, montés symétriquement sur chaque bras 10.1 à 10.3 comme cela est illustré dans la figure 13.

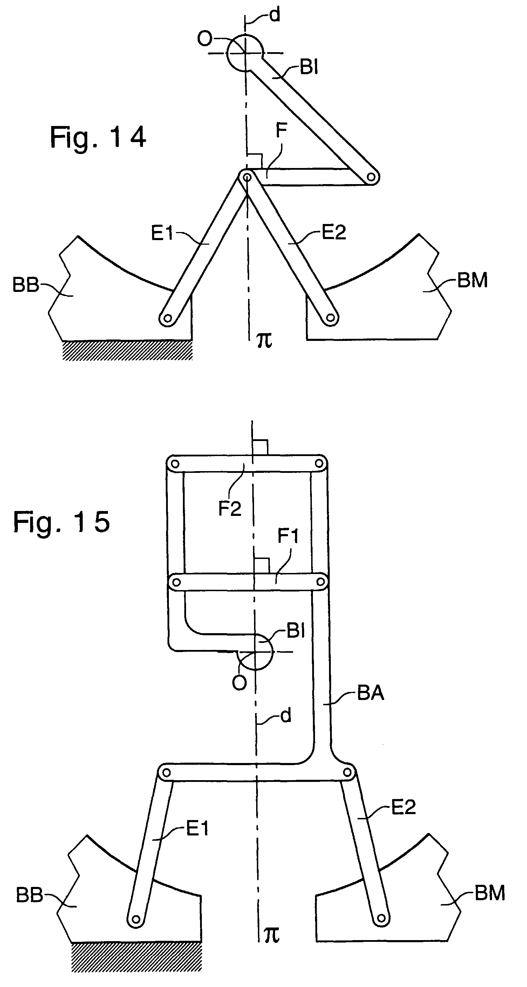

Finalement, on mentionnera que la chaîne cinématique d'asservissement décrite ci-dessus en référence aux figures 9 à 11 ne constitue qu'un exemple non limitatif. Les figures 14 et 15 présentent de manière schématique deux alternatives qui remplissent le même rôle, soit d'imposer au bloc intermédiaire BI un angle de rotation qui soit la moitié de l'angle de rotation $\beta$ du bloc mobile BM.

La chaîne cinématique d'asservissement CA ainsi illustrée à la figure 14 diffère de la chaîne cinématique précédemment décrite en ce qu'elle ne comporte pas de bloc d'asservissement BA et un seul bras flexible F disposé sensiblement perpendiculairement au plan bissecteur $\pi$ du pivot (droite d dans la figure 14). Le bras flexible F remplace les troisième et quatrième bras flexibles F1 et F2 de la structure précédemment décrite et joue également le rôle d'un guidage linéaire en première approximation pour des déplacements de faible amplitude. Les premier et deuxième bras flexibles E1 et E2 sont par ailleurs directement liés à ce seul bras flexible F par un seul pivot situé sensiblement dans le plan bissecteur $\pi$ (sur la droite d dans la figure 14). De manière analogue à ce qui a été décrit précédemment, dans l'hypothèse où le bras flexible F constitue un guidage linéaire rectiligne suivant la droite d, le bloc mobile BI parcourt un angle qui est la moitié de l'angle parcouru par le bloc mobile BM.

Enfin, la chaîne cinématique d'asservissement CA illustrée à la figure 15 ne diffère de la chaîne cinématique présentée aux figures 9 à 11 que par le positionnement relatif des troisième et quatrième bras flexibles F1 et F2 par rapport au bloc intermédiaire BI. Contrairement à la structure présentée aux figures 9 à 11, cette chaîne cinématique ne peut être avantageusement combinée à la structure du pivot de sorte à former une structure plane, du fait de la présence d'interférences mécaniques entre les divers bras et blocs formant ces structures. La chaîne cinématique illustrée à la figure 15 peut toutefois être disposée dans un plan parallèle au plan du pivot et remplir ainsi la fonction recherchée.

## Revendications

1. Pivot flexible comportant un bloc de base (BB) fixe et un bloc mobile (BM) relativement audit bloc de base (BB), ce bloc mobile (BM) étant lié audit bloc de base (BB) par l'intermédiaire d'une structure flexible (SF) définissant un axe de rotation (O) autour duquel ce bloc mobile (BM) peut sensiblement pivoter, ce pivot étant caractérisé en ce que ladite structure flexible (SF) comporte un bloc intermédiaire (BI) lié respectivement audit bloc de base (BB) et audit bloc mobile (BM) par l'intermédiaire d'une première (B1, B2) et d'une deuxième paire (B3, B4) de bras flexibles respectivement.

2. Pivot flexible selon la revendication 1, caractérisé en ce que lesdits bras flexibles (B1, B2, B3, B4) comprennent chacun un paire de pivots élémentaires (P1, P1'; P2, P2'; P3, P3'; P4, P4').

3. Pivot flexible selon la revendication 2, caractérisé en ce que lesdits pivots élémentaires (P1, P1'; P2, P2'; P3, P3'; P4, P4') sont formés d'évidements créant des zones flexibles.

4. Pivot flexible selon la revendication 3, caractérisé en ce que lesdits évidements formant lesdits pivots élémentaires (P1, P1'; P2, P2'; P3, P3'; P4, P4') sont des cous de profil sensiblement circulaire.

5. Pivot flexible selon l'une quelconque des revendications précédentes, caractérisé en ce qu'il comporte en outre une chaîne cinématique d'asservissement (CA) liant ledit bloc mobile (BM), ledit bloc intermédiaire (BI) et ledit bloc de base (BB), de sorte que le mouvement angulaire dudit bloc intermédiaire (BI) est asservi au mouvement angulaire dudit bloc mobile (BM).

6. Pivot flexible selon la revendication 5, caractérisé en ce que ladite chaîne cinématique d'asservissement (CA) impose audit bloc intermédiaire (BI), pour un mouvement angulaire $\beta$ dudit bloc mobile (BM), un mouvement angulaire sensiblement égal à $\beta/2$.

7. Pivot flexible selon la revendication 6, caractérisé en ce que ladite chaîne cinématique d'asservissement (CA) comporte :

   - un bloc d'asservissement (BA),
   - des premier et deuxième bras flexibles identiques (E1, E2) liant ledit bloc d'asservissement (BA) audit bloc de base (BB) et audit bloc mobile (BM) respectivement, ces premier et deuxième bras flexibles (E1, E2) étant disposés symétriquement relativement à un plan bissecteur $\pi$ du pivot, et
   - des troisième et quatrième bras flexibles identiques (F1, F2) liant ledit bloc d'asservissement (BA) audit bloc intermédiaire (BI), ces troisième et quatrième bras (F1, F2) étant disposés en parallèle, sensiblement perpendiculairement au plan bissecteur $\pi$, et formant un guidage linéaire dudit bloc d'asservissement (BA) relativement audit bloc intermédiaire (BI).

8. Pivot flexible selon la revendication 7, caractérisé en ce que lesdits premier, deuxième, troisième et quatrième bras flexibles (E1, E2, F1, F2) comprennent chacun un paire de pivots élémentaires (PE1, PE1'; PE2, PE2'; PF1, PF1'; PF2, PF2').

9. Pivot flexible selon la revendication 8, caractérisé en ce que lesdits pivots élémentaires (PE1, PE1'; PE2, PE2'; PF1, PF1'; PF2, PF2') sont formés d'évidements créant des zones flexibles.

10. Pivot flexible selon la revendication 9, caractérisé en ce que lesdits évidements formant lesdits pivots élémentaires (PE1, PE1'; PE2, PE2'; PF1, PF1'; PF2, PF2') sont des cous de profil sensiblement circulaire.

11. Pivot flexible selon l'une quelconque des revendications 5 à 10, caractérisé en ce que ladite structure flexible (SF) et ladite chaîne cinématique d'asservissement (CA) forment une structure plane.

12. Pivot flexible selon la revendication 11, caractérisé en ce que celuici est réalisé de manière monolithique dans un seul bloc de matière.

13. Manipulateur caractérisé en ce qu'il comporte au moins un pivot flexible selon l'une quelconque des revendications précédentes.

14. Manipulateur à six degrés de liberté comportant :

   - une plate-forme (1),
   - trois bras (10.1 à 10.3) mobiles articulés à ladite plate-forme (1) aux moyens de pivots (20.1 à 20.3) et disposés symétriquement autour de ladite plate-forme (1), et
   - trois actionneurs plans (40.1 à 40.3) à deux degrés de liberté liés respectivement à un pied (15.1 à 15.3) desdits bras (10.1 à 10.3) par des rotules (30.1 à 30.3), caractérisé en ce que chacun desdits pivots (20.1 à 20.3) comprend une paire de pivots flexibles (21.1 à 21.3, 22.1 à 22.3) selon l'une quelconque des revendications 5 à 12, montés symétriquement sur chacun desdits bras (10.1 à 10.3).

# Fig. 1
(ART ANTERIEUR)

# Fig. 5
(ART ANTERIEUR)

## Fig. 2
(ART ANTERIEUR)

## Fig. 3
(ART ANTERIEUR)

## Fig. 4
(ART ANTERIEUR)

# Fig. 6a

# Fig. 6b
(ART ANTERIEUR)

## Fig. 7

## Fig. 8

Fig. 9

Fig. 10

# Fig. 1 1

Fig. 1 2
(ART ANTERIEUR)

Fig. 1 3

Fig. 14

Fig. 15

Office européen
des brevets

# RAPPORT DE RECHERCHE EUROPEENNE

Numéro de la demande

EP 98 12 3953

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
|---|---|---|---|
| A | US 4 261 211 A (HABERLAND RUEDIGER) 14 avril 1981 (1981-04-14) * colonne 2, ligne 65 - colonne 6, ligne 29; figures 1-11 * --- | 1 | F16C11/12 |
| A | US 5 781 355 A (MEIER HANS-JUERGEN) 14 juillet 1998 (1998-07-14) * colonne 2, ligne 27 - colonne 3, ligne 55; figures 1,2 * --- | 1-4,8-12 | |
| A | US 4 559 717 A (SCIRE FREDRIC E ET AL) 24 décembre 1985 (1985-12-24) * colonne 3, ligne 39 - colonne 7, ligne 25; figures 1-6 * ----- | 2-4,8-12 | |

| | | | DOMAINES TECHNIQUES RECHERCHES |
|---|---|---|---|
| | | | F16C |

Le présent rapport a été établi pour toutes les revendications

| Lieu de la recherche | Date d'achèvement de la recherche | Examinateur |
|---|---|---|
| MUNICH | 16 septembre 1999 | Fischbach, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 98 12 3953

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-09-1999

| Document brevet cité au rapport de recherche | Date de publication | Membre(s) de la famille de brevet(s) | | Date de publication |
|---|---|---|---|---|
| US 4261211 A | 14-04-1981 | DE | 2653427 A | 01-06-1978 |
| | | FR | 2372346 A | 23-06-1978 |
| | | GB | 1592911 A | 15-07-1981 |
| | | JP | 1448153 C | 11-07-1988 |
| | | JP | 53065579 A | 12-06-1978 |
| | | JP | 62052244 B | 04-11-1987 |
| US 5781355 A | 14-07-1998 | DE | 29603024 U | 18-04-1996 |
| | | EP | 0797115 A | 24-09-1997 |
| US 4559717 A | 24-12-1985 | AUCUN | | |

Pour tout renseignement concernant cette annexe : voir Journal Officiel de l'Office européen des brevets. No.12/82